**Europäisches Patentamt**

**European Patent Office**

**Office européen des brevets**

(19)

(11) Veröffentlichungsnummer : **0 280 674 B1**

(12)

# EUROPÄISCHE PATENTSCHRIFT

(45) Veröffentlichungstag der Patentschrift :
**13.11.91 Patentblatt 91/46**

(51) Int. Cl.⁵ : **B60C 9/20**, B60C 9/18

(21) Anmeldenummer : **88890015.6**

(22) Anmeldetag : **27.01.88**

(54) **Fahrzeugluftreifen.**

(30) Priorität : **19.02.87 AT 361/87**

(43) Veröffentlichungstag der Anmeldung :
**31.08.88 Patentblatt 88/35**

(45) Bekanntmachung des Hinweises auf die
Patenterteilung :
**13.11.91 Patentblatt 91/46**

(84) Benannte Vertragsstaaten :
**AT BE CH DE ES FR GB GR IT LI LU NL SE**

(56) Entgegenhaltungen :
**FR-A- 1 290 231**
**FR-A- 1 377 323**
**FR-A- 2 132 360**
**GB-A- 1 262 105**
**US-A- 2 958 359**

(73) Patentinhaber : **Semperit Reifen**
**Aktiengesellschaft**
**Wienersdorferstrasse 20-24**
**A-2514 Traiskirchen (AT)**

(72) Erfinder : **Beckmann, Otto, Dr.**
**Kapellengasse 5/1/5/21**
**A-2514 Traiskirchen (AT)**

(74) Vertreter : **Vinazzer, Edith**
**Semperit Reifen Aktiengesellschaft**
**Patentabteilung Wienersdorferstrasse 20-24**
**A-2514 Traiskirchen (AT)**

## Beschreibung

Die Erfindung betrifft einen Fahrzeugluftreifen mit einem zwischen einer Radialkarkasse und einem Laufflächenteil angeordneten zumindest drei Lagen aufweisenden bzw. bildenden Gürtelverband, wobei die Gürtellagen mit Festigkeitsträgern, beispielsweise aus Stahlkord, versehen sind und zwischen zwei inneren Gürtellagen eine gesonderte Gummilage angeordnet ist gemäß dem Oberbegriff des Anspruchs 1. Ein derartiger Reifen ist z.B. durch die FR-A-1290231 bekannt.

Aus der DE-A-3105209 ist ein Fahrzeugluftreifen bekannt, der einen aus vier übereinander liegenden Kordgewebelagen bestehenden Gürtel aufweist, wobei zwischen zwei inneren Gürtellagen eine Gummilage angeordnet ist, die aus einem Mittelstreifen und zwei gesonderten seitlichen Streifen besteht. Der Mittelstreifen ist aus einer sehr weichen Gummimischung gefertigt, deren Härte etwa 40 bis 50 Shore A beträgt. Die Härte der seitlichen Streifen ist hingegen wesentlich höher gewählt und bewegt sich im Bereich von 65 bis 70 Shore A. Mittelstreifen und Seitenstreifen sind so angeordnet, daß sie einander in einem gewissen Bereich überlappen. Als besonders vorteilhaft bei dieser bekannten Gürtelkonstruktion ist die erzielbare Herabsetzung des Rollwiderstandes zu nennen. Durch die gesonderte Gummilage wird weiters auch die Verletzungsanfälligkeit des Laufflächenteiles durch Steine oder dgl. reduziert. Andererseits ist jedoch der gesamte Gürtelverband nicht mehr so starr wie ein in herkömmlicher Weise aufgebaute vierlagiger Gürtel, so daß ein etwas höherer Abrieb der Lauffläche zu erwarten ist.

Weiters macht die gesonderte Gummilage den Reifen im Laufflächenbereich dicker und somit auch schwerer als vergleichbare Reifen mit herkömmlichen Gürtelkonstruktionen.

Die Erfindung hat sich nun die Aufgabe gestellt, einen gattungsgemäßen Fahrzeugluftreifen hinsichtlich der Abriebsbeständigkeit zu verbessern, wobei auch eine Verringerung des Reifengewichtes erzielbar sein soll.

Gelöst wird die gestellte Aufgabe erfindungsgemäß durch, die Merkmale des Anspruchs 1.

Die erfindungsgemäße Gürtelkonstruktion ergibt einen in sich starreren Gürtelverband als bei der Lösung nach DE-A-3105209 mit einer durchgehenden Gummilage, wodurch eine Verbesserung der Abriebsbeständigkeit des Reifens erzielbar ist. Der Rollwiderstand des Reifens kann hingegen gleich günstig erhalten bleiben. Auch das Gewicht des Reifens wird durch die erfindungsgemäßen Maßnahmen nicht zusätzlich erhöht. Das Teilen einer inneren Lage hat außerdem den vorteilhaften Effekt, daß die entsprechenden äußeren Lagenkanten, die als bevorzugte Ausgangspunkte von Brüchen anzusehen sind, nunmehr bei Beanspruchung des Reifens geringere Spitzenspannungen entwickeln. Damit verbunden ist eine Erhöhung der Lebensdauer des Gürtelverbandes und weiters auch noch die Möglichkeit ansonsten eventuell vorzusehende Gürtelkeile wegzulassen, gegeben.

Erwähnt sei, daß das Teilen von Gürtellagen eine an sich bekannte Maßnahme darstellt. Insbesondere ist das Teilen der von der Karkasse aus gesehen ersten Gürtellage etwa bei LKW-Stahlgürtelreifen eine vielfach geübte Praxis. Auch in der Patentliteratur ist diese Maßnahme bereits beschrieben worden, es wird etwa auf die DE-PS 2216441 verwiesen. Vor allem bei breiten Gürtelverbänden wurde diese Maßnahme gesetzt, um Stauchbrüche der ersten Gürtellage zu vermeiden. Auch bei modernen Gürtelkonstruktionen wird oft die erste Gürtellage geteilt, um die Aufstandsdruckverteilung von Reifen zu vergleichmäßigen und solcherart einen günstigen Einfluß auf die Abriebsbeständigkeit zu erzielen.

Bei einer bevorzugten Ausführungsform der Erfindung ist die von der Radialkarkasse aus betrachtet zweite oder dritte Lage eine geteilte Lage, wobei die zwischen den beiden Lagenteilen angeordnete Gummilage im Mittelbereich vorzugsweise dicker ist als in den Randbereichen, insbesondere etwa bis zum Zweifachen der Dicke in den Randbereichen beträgt, wo die Dicken von Gummilage und Lagenteilen einander angepaßt sind. Die Gummilage bietet somit dort, wo die größte Verletzungsanfälligkeit hinsichtlich Schnittverletzungen durch Steine besteht, den größten Schutz durch die entsprechend größere Pufferwirkung.

Nach einem weiteren Merkmal der Erfindung ist es vorteilhaft, wenn die Breite der Gummilage 30 bis 70% der Gürtelbreite beträgt. Wird nämlich die Gummilage zu schmal ausgeführt, so ist die erzielbare Pufferwirkung nicht mehr so groß, andererseits kann eine zu breite Ausführung der Gummilage die Gesamtfestigkeit des Gürtels beeinträchtigen.

In diesem Zusammenhang ist es auch günstig, wenn die beiden Lagenteile der geteilten Lage seitlich zumindest bis zur breitesten Gürtellage reichen bzw. diese seitlich überragen.

Eine weitere Ausgestaltung der Erfindung sieht vor, daß die Gummilage nicht nur den Zwischenraum zwischen den Lagenteilen der geteilten Gürtellage auffüllt, sondern auch in die Bereiche zwischen den Lagenteilen und der benachbarten Gürtellage hinein verläuft.

Bei dieser Ausführungsvariante der Erfindung ist es weiters vorteilhaft, wenn der die Gummilage zumindest teilweise aufnehmende Zwischenraum zwischen den Lagenteilen der geteilten Gürtellage 15 bis 30% der Gürtelbreite beträgt. Vorteilhafterweise kann bei diesem Ausführungsbeispiel zur Erhöhung der Pufferwirkung die Dicke der Gummilage im Mittelbereich bis zum Fünffachen der Dicke der Lagenteile der geteilten Lage betragen.

Bei einem weiteren Ausführungsbeispiel der Erfindung ist zumindest eine der Gürtellagen, vorzugsweise die erste Gürtellage als eine Faltlage ausgeführt ist, wobei die Gummilage zumindest den Zwischenraum zwischen den umgefalteten Teilen (3"a) der Faltlage (3") auffüllt.

Zusätzlich kann jedoch bei einer weiteren Ausgestaltung der Erfindung vorgesehen werden, daß die Faltlage eine Gürtellage aufnimmt, die vorzugsweise geteilt ausgeführt ist.

Auch die Rückprallelastizität der gewählten Gummimischung für die Gummilage ist von Bedeutung, da sich diese unmittelbar auf die Wärmeentwicklung des Reifens im Betrieb auswirkt. Günstig ist es, wenn eine Gummimischung für die Gummilage gewählt wird, deren Rückprallelastizität größer 45% ist. Um innerhalb des Gürtelverbandes ein gutes Verschweißen der einzelnen Bauteile miteinander zu begünstigen, ist es vorteilhaft, wenn als Gummimischung für die Gummilage eine Haftmischung verwendet wird.

Weitere Merkmale, Vorteile und Einzelheiten der Erfindung werden nun anhand der Zeichnung, die einige Ausführungsbeispiele des erfindungsgemäßen Fahrzeugluftreifens darstellt, näher beschrieben. Hiebei ist in den Zeichnungsfiguren 1 bis 3 jeweils ein radialer Querschnitt durch den Laufflächen- und den Schulterbereich eines Fahrzeugluftreifens dargestellt.

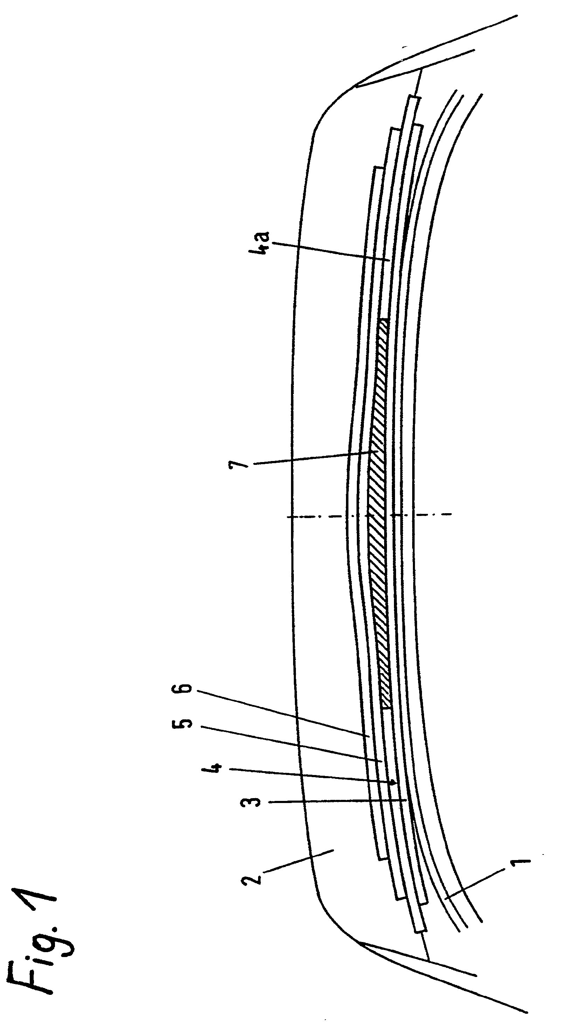

Wie aus Fig. 1 ersichtlich ist, weist der Fahrzeugluftreifen einen Laufflächenteil, einen diesen Bereich verstärkenden Gürtel und eine unterhalb des Gürtels verlaufende Radialkarkasse 1 auf, deren Endbereiche in nicht dargestellter Weise durch Umschlingen von Wulstkernen in Wulstbereichen verankert sind. Zwischen der Radialkarkasse 1 und dem profilierten Laufflächenteil 2 ist der bei diesem Ausführungsbeispiel aus 4 Gürtellagen 3, 4, 5, 6 bestehende Gürtel angeordnet. Die einzelnen Gürtellagen 3, 4, 5 und 6 sind in bekannter Weise mit Festigkeitsträgern, etwa aus Stahlkord, versehen.

Die von der Radialkarkasse 1 aus betrachtet erste Gürtellage 3 ist eine durchgehende Lage, wohingegen die zweite Gürtellage 4 geteilt ausgeführt ist und somit aus zwei Lagenteilen 4a besteht, die jeweils den Seitenbereichen des Gürtels zugeordnet sind. Zwischen den beiden Lagenteilen 4a ist nun eine als Puffer wirksame Gummilage 7 eingebettet. Die Dicke der Gummilage 7 ist randseitig der Dicke der dort anschließenden Lagenteile 4a der Gürtellage 4 angepaßt. Die Gummilage 7 kann nun von gleichbleibender Dicke ausgeführt werden oder wie Fig. 1 zeigt, gegen die Mitte zu dicker ausgeführt werden. Hiebei wird die größte Dicke bevorzugt etwa das Zweifache der Dicke im Randbereich betragen. Die auf diese Weise erzielbare größere Federungswirkung und die damit verbundene geringere Verletzungsanfälligkeit, insbesondere in der Mitte des Laufflächenbereiches, wo die Gefahr, daß durch Steine Schnittverletzungen auftreten, am größten ist, bietet eine besonders gute Schutzfunktion.

In diesem Zusammenhang ist es wichtig, daß die Gummimischung für die Gummilage 7 weicher ist als die für die einzelnen Gürtellagen 3, 4, 5 und 6 verwendete Gürtelaufpreßmischung. Die Härte der Gummilage 7 soll hiebei um mindestens 10 Shore-Punkte niedriger gewählt werden als die Härte der Gürtelaufpreßmischung und liegt demnach etwa im Bereich von 55 bis 65 Shore A, vorzugsweise etwa 60 Shore A. Weiters wird für die Gummilage 7 bevorzugt eine Haftmischung verwendet, die einen guten Verbund zu den angrenzenden Lagenteilen 4a der Gürtellage 4 sicherstellt, so daß in diesen kritischen Bereichen Ablösungen bzw. das Auftreten von Einrissen weitgehendst vermieden werden können. Vorteilhaft wirkt es sich weiters aus, wenn die Rückprallelastizität (nach DIN 53512) der Gummilage 7 im Bereich zwischen 55 und 60% liegt.

Die Breite der Gummilage 7 soll in einem Bereich zwischen 30 und 70% der Gürtelbreite gewählt werden. Wird die Gummilage 7 zu schmal ausgeführt, so ist die erzielbare Pufferwirkung beeinträchtigt, andererseits bewirkt eine zu breite Ausführung der Gummilage 7 eine Verminderung der Gesamtfestigkeit des Gürtels.

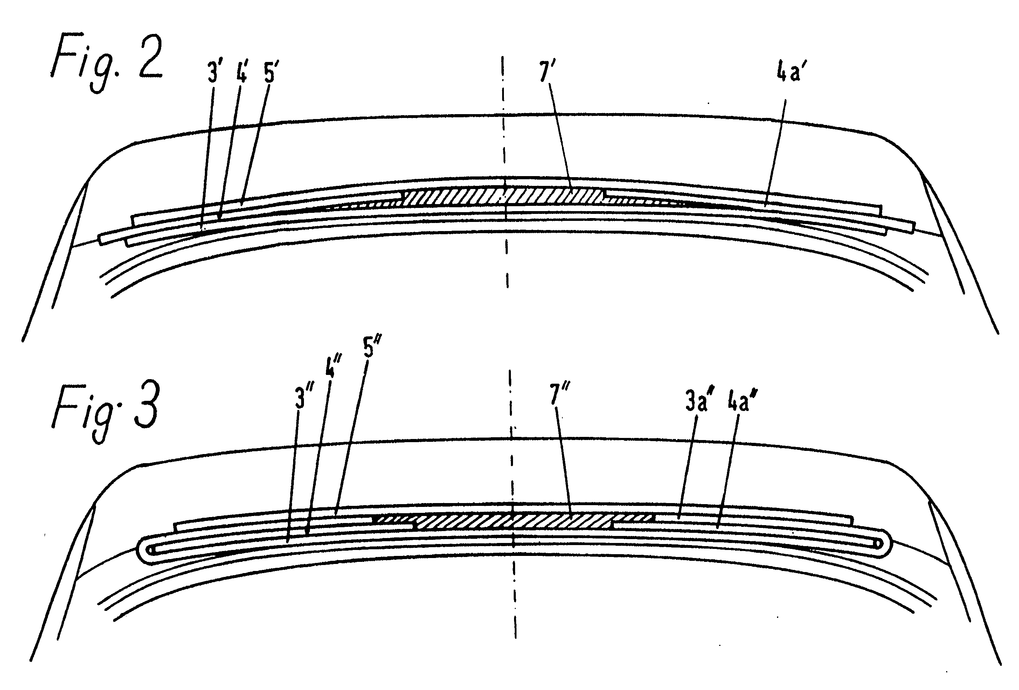

Ein weiteres Ausführungsbeispiel, wo ein dreilagiger Gürtel vorgesehen ist, zeigt Fig. 2. Auch bei diesem Ausführungsbeispiel ist die erste Gürtellage 3' als durchgehende Lage ausgeführt, die zweite Gürtellage 4', wie im Ausführungsbeispiel gemäß Fig. 1, geteilt und die dritte, oberste Lage 5' wiederum als durchgehende Lage ausgeführt.

Die Gummilage 7' ist bei diesem Ausführungsbeispiel so gestaltet, daß sie nicht nur den Zwischenraum zwischen den Lagenteilen 4'a der Gürtellage 4' auffüllt, sondern auch in die Bereiche zwischen den Lagenteilen 4'a und der ersten Gürtellage 3' hinein verläuft. Auch hier wird für die Gummilage 7' bevorzugt eine Ausgestaltung gewählt werden, bei der die Dicke der Gummilage 7' gegen die Randbereiche zu abnimmt. In der Mitte, dort wo die Pufferwirkung am größten sein soll, also im Bereich zwischen den beiden Lagenteilen 4'a ist die Gummilage 7' am dicksten und kann etwa bis zum Fünffachen der Dicke der Teillagen 4'a betragen. Im dicker ausgeführten Mittelbereich ist es von Vorteil, wenn die Breite der Gummilage 7' etwa 15 bis 40% der Breite des Gürtels beträgt. Die zwischen den Lagenteilen 4'a und der Gürtellage 3' angeordneten Bereiche der Gummilage 7' verlaufen maximal bis zu den Rändern der Gürtellage 3'. Bezüglich der für die Gummilage 7' verwendeten Mischung, deren Härte und Rückprallelastizität gelten die in der Beschreibung zu Fig. 1 bereits gemachten Angaben.

Fig. 3 zeigt ein Ausführungsbeispiel für einen Gürtel mit einer Faltlage. Dabei ist die erste Gürtellage 3" als eine gefaltete Gürtellage ausgeführt, wobei die gefaltete Lage 3″ eine Gürtellage 4″ aufnimmt, die aus zwei Lagenteilen 4″a besteht. Eine durchgehende Lage 5″ bildet die oberste Lage des Gürtels und überdeckt die nun zwischen den Lagenteilen 4″a und den Teilen 3″a der gefalteten Lage 3″ angeordnete Gummilage 7″. Auch bei diesem Ausführungsbeispiel ist gewährleistet, daß die Gummilage 7″ ihre größte Pufferwirkung im Mittelbereich der Lauffläche entfalten kann, da dort die Gummilage 7″ am dicksten ausgeführt ist. Auch bei diesem Ausführungsbeispiel wird der mittlere dickere Bereich der Gummilage 7″ in einer Breite ausgeführt, die etwa 15 bis 40% der Breite des Gürtels beträgt. Hinsichtlich Gummimischung, Härte und Rückprallelastizität der Gummilage 7″ gelten auch bei diesem Ausführungsbeispiel die obigen Ausführungen.

Die Erfindung ist auf die dargestellten Ausführungsbeispiele nicht eingeschränkt. So ist es ohne weiteres denkbar, die dargestellten Gürtelkonstruktionen untereinander zu kombinieren, etwa indem bei dem Ausführungsbeispiel gemäß Fig. 1 bzw. 2 ebenfalls eine geteilte Lage vorgesehen wird. Weiters kann Fig. 2 so abgewandelt werden, daß anstelle einer Faltlage zusätzlich eine zweite geteilte Lage eingesetzt wird. Auch ist es möglich, den mittleren Bereich der Gummilage nach den Ausführungsbeispielen gemäß den Figuren 2 und 3 so auszuführen, daß gegen die Mitte zu die Dicke der Gummilage noch zunimmt. Ferner könnte etwa in Fig. 1 bzw. Fig. 3 die Gummilage, — wie dies in Fig. 2 der Fall ist — keilförmig zwischen den Gürtellagen auslaufen. Eine Vervielfältigung der Möglichkeiten ergibt sich außerdem, wenn mehr als vier Gürtellagen verwendet werden.

**Patentansprüche**

1. Fahrzeugluftreifen mit einem zwischen einer Radialkarkasse und einem Laufstreifen angeordneten zumindest drei Lagen (3-6 ; 3′, 4′, 5′ ; 3″, 4″, 5″) aufweisenden Gürtelverband, wobei die Gürtellagen mit Festigkeitsträgern, beispielsweise aus Stahlkord, versehen sind und zumindest einer der zwischen zumindest einer radial inneren und zumindest einer radial äußeren Gürtellage angeordneten Gürtellagen als zwei Randteile (4a, 4′a, 4″a) aufweisende, axial geteilte Lage (4, 4′, 4″) oder als eine zwei Teillagen (3″a) bildende Faltlage (3″) ausgebildet ist, wobei eine gesonderte Gummilage (7, 7′, 7″) vorgesehen ist, die zumindest die durch die axiale Teilung gebildete Lücke oder zumindest den Bereich zwischen den umgefalteten Teillagen (3″a) ausfüllt, dadurch gekennzeichnet, daß die Gummilage (7, 7′, 7″) aus einer Gummimischung besteht, deren Härte um mindestens 10 Shore A-Punkte geringer ist als die Härte der für die Gürtellagen eingesetzten Aufpreßmischung.

2. Fahrzeugluftreifen nach Anspruch 1, dadurch gekennzeichnet, daß die von der Radialkarkasse (1) aus betrachtet zweite oder dritte Lage eine axial geteilte Lage (4) ist, wobei die zwischen den beiden Lagenteilen (4a) angeordnete Gummilage (7) im Mittelbereich dicker ist als in den Randbereichen, insbesondere etwa bis zum Zweifachender Dicke in den Randbereichen beträgt, wo die Dicken von Gummilage (7) und Lagenteilen (4a) einander angepaßt sind.

3. Fahrzeugluftreifen nach Anspruch 1 oder 2, dadurch gekennzeichnet, daß die Breite der Gummilage (7) 30 bis 70% der Gürtelbreite beträgt.

4. Fahrzeugluftreifen nach einem der Ansprüche 1 bis 3, dadurch gekennzeichnet, daß die beiden Lagenteile (4a) der axial geteilten Lage (4) seitlich zumindest bis zur breitesten Gürtellage reichen bzw. diese seitlich überragen.

5. Fahrzeugluftreifen nach Anspruch 1 oder 2, dadurch gekennzeichnet, daß die Gummilage (7′) nicht nur den Zwischenraum zwischen den Lagenteilen (4′a) der axial geteilten Gürtellage (4′) ausfüllt, sondern auch in die Bereiche zwischen den Lagenteilen (4′a) und der benachbarten Gürtellage (3′) hinein verläuft.

6. Fahrzeugluftreifen nach einem der Ansprüche 1, 2 oder 5, dadurch gekennzeichnet, daß der die Gummilage (7′) zumindest teilweise aufnehmende Zwischenraum zwischen den Lagenteilen (4′a) der axial geteilten Gürtellage (4′) 15 bis 30% der Gürtelbreite beträgt.

7. Fahrzeugluftreifen nach Anspruch 6, dadurch gekennzeichnet, daß die Dicke der Gummilage (7′) im Mittelbereich bis zum Fünffachen der Dicke der Lagenteile (4′a) der axial geteilten Lage (4′) beträgt.

8. Fahrzeugluftreifen nach einem der Ansprüche 1 bis 7, dadurch gekennzeichnet, daß zumindest eine der Gürtellagen, vorzugsweise die erste Gürtellage, als eine Faltlage (3″) ausgeführt ist, wobei die Gummilage (7″) zumindest den Zwischenraum zwischen den umgefalteten Teilen (3″a) der Faltlage (3″) ausfüllt.

9. Fahrzeugluftreifen nach Anspruch 8, dadurch gekennzeichnet, daß die Faltlage (3″) eine Gürtellage (4″) aufnimmt, die (axial) geteilt ausgeführt ist.

10. Fahrzeugluftreifen nach einem der Ansprüche 1 bis 9, dadurch gekennzeichnet, daß die Gummimischung für die Gummilage (7, 7′, 7″) eine Rückprallelastizität > 45% aufweist.

11. Fahrzeugluftreifen nach einem der Ansprüche 1 bis 10, dadurch gekennzeichnet, daß die Gummimischung für die Gummilage (7, 7′, 7″) eine Haftmischung ist.

**Claims**

1. A vehicle pneumatic tyre comprising a belt unit which is arranged between a radial carcass and a tread area and which comprises at least three layers (3-6 ; 3', 4', 5' ; 3", 4" 5"), wherein the belt layers are provided with high-strength carriers, for example composed of steel cord, and at least one of the belt layers arranged between at least one radially inner and at least one radially outer belt layer is formed as an axially divided layer (4, 4', 4") comprising two edge portions (4a, 4'a, 4"a) or as a folded layer (3") which forms two layer portions (3"a), wherein a separate rubber layer (7, 7', 7") is provided which at least fills the gap formed by the axial division or at least fills the zone between the folded over layer portions (3"a), characterized in that the rubber layer (7, 7', 7") consists of a rubber mixture, the Shore A hardness of which is at least 10 points lower than the hardness of the press-on mixture used for the belt layers.

2. A vehicle pneumatic tyre as claimed in Claim 1, characterised in that the second or third layer, considered from the radial carcass (1), is an axially divided layer (4), where the rubber layer (7), which is arranged between the two layer portions (4a), is thicker in the central zone than in the edge zones, and in particular is approximately up to twice as thick as in the edge zones, where the ticknesses of rubber layer (7) and layer portions (4a) are adapted to one another.

3. A vehicle pneumatic tyre as claimed in Claim 1 or 2, characterised in that the width of the rubber layer (7) amounts to 30 to 70% of the belt width.

4. A vehicle pneumatic tyre as claimed in one of Claims 1 to 3, characterised in that the two layer portions (4a) of the axially divided layer (4) extend laterally at least up to the widest belt layer or project laterally beyond the latter.

5. A vehicle pneumatic tyre as claimed in Claim 1 or 2, characterised in that the rubber layer (7') not only fills the space between the layer portions (4'a) of the axially divided belt layer (4') but also extends into the zones between the layer portions (4'a) and the adjacent belt layer (3').

6. A vehicle pneumatic tyre as claimed in one of Claims 1, 2 or 5, characterised in that the space between the layer portions (4'a) of the axially divided belt layer (4'), which space at least partially accommodates the rubber layer (7'), amounts to 15 to 30% of the belt width.

7. A vehicle pneumatic tyre as claimed in Claim 6, characterised in that the thickness of the rubber layer (7') in the central zone amounts to up to five times the tickness of the layer portions (4'a) of the axially divided layer (4').

8. A vehicle pneumatic tyre as claimed in one of Claims 1 to 7, characterised in that at least one of the belt layers, preferably the first belt layer, is formed as a folded layer (3"), where the rubber layer (7") at least fills the space between the folded over portions (3"a) of the folded layer (3").

9. A vehicle pneumatic tyre as claimed in Claim 8, characterised in that the folded layer (3") accomodates a belt layer (4") which is axially divided.

10. A vehicle pneumatic tyre as claimed in one of Claims 1 to 9, characterised in that the rubber mixture for the rubber layer (7, 7', 7") possesses a rebound resilience of > 45%.

11. A vehicle pneumatic tyre as claimed in one of Claims 1 to 10, characterised in that the rubber mixture for the rubber layer (7, 7', 7") is a bonding mixture.

## Revendications

1. Bandage pneumatique pour véhicules comprenant une ceinture comportant au moins trois couche (3-6 ; 3', 4', 5' ; 3", 4", 5") disposées entre une carcasse radiale et une bande de roulement, les couches de la ceinture étant munies d'éléments de renforcement tels que des cordes d'acier, et l'une au moins des couches de la ceinture disposée entre au moins une couche radiale interne et au moins une couche radiale externe étant constituée sous forme d'une couche subdivisée axialement (4, 4', 4") et comprenant deux parties de bord (4a, 4'a, 4"a), ou sous forme d'une couche pliée (3") formant deux couches partielles (3"a), en prévoyant une couche de caoutchouc particulière (7, 7', 7") remplissant au moins l'espace intermédiaire formé par la subdivision axiale ou au moins la région située entre les couches partielles repliées (3"a), caractérisé en ce que la couche de caoutchouc (7, 7', 7") est constituée par un mélange de caoutchouc dont la dureté Shore A est inférieure d'au moins 10 points à celle du mélange comprimé utilisé pour les couches de la ceinture.

2. Bandage pneumatique pour véhicules selon la revendication 1, caractérisé en ce que la seconde ou troisième couche, vue en partant de la carcasse radiale (1), est une couche subdivisée axialement (4), la couche de caoutchouc (7) disposée entre les deux parties de couche (4a) étant plus épaisse dans sa région centrale que dans ses régions de bord et son épaisseur étant en particulier environ le double de l'épaisseur des régions de bord, où les épaisseurs de la couche de caoutchouc (7) et des parties de couche (4a) sont adaptées les unes aux autres.

3. Bandage pneumatique pour véhicules selon la revendication 1 ou 2, caractérisé en ce que la largeur de la couche de caoutchouc (7) représente de 30 à 70% de la largeur de la ceinture.

4. Bandage pneumatique pour véhicules selon l'une quelconque des revendications 1 à 3, caractérisé en ce que les deux parties de couche (4a) de la couche subdivisée axialement (4) parviennent latéralement jusqu'à au moins la couche la plus large, ou recouvre celle-ci latéralement.

5. Bandage pneumatique pour véhicules selon la revendication 1 ou 2, caractérisé en ce que la couche de caoutchouc (7') remplit non seulement l'espace intermédiaire entres les parties de couche (4'a) de la couche de ceinture subdivisées axiale. ent (4'), mais est également disposée dans les régions situées entre les parties de couche (4'a) et la couche de ceinture voisine (3').

6. Bandage pneumatique pour véhicules selon l'une quelconque des revendications 1, 2 ou 5, caractérisé en ce que l'espace intermédiaire situé entre les parties (4'a) de la couche de ceinture subdivisée axialement (4') et dans lequel est disposée au moins en partie la couche de caoutchouc (7') a une largeur qui représente environ de 15 à 30% de celle de la bande.

7. Bandage pneumatique pour véhicules selon la revendication 6, caractérisé en ce que l'épaisseur de la couche de caoutchouc (7') dans la région centrale représente jusqu'à cinq fois l'épaisseur des parties de couche (4'a) de la couche subdivisée axialement (4').

8. Bandage pneumatique pour véhicules selon l'une quelconque des revendications 1 à 7, caractérisé en ce que l'une au moins des couches de la ceinture, et de préférence la première couche, est constituée sous forme d'une couche pliée (3"), la couche de caoutchouc (7") remplissant au moins l'espace intermédiaire compris entre les parties repliées (3"a) de la couche pliée (3").

9. Bandage pneumatique pour véhicules selon la revendication 8, caractérisé en ce que la couche pliée (3") entoure une couche (4") qui est subdivisée axialement.

10. Bandage pneumatique pour véhicules selon l'une quelconque des revendications 1 à 9, caractérisé en ce que le mélange de caoutchouc destiné à la couche de caoutchouc (7, 7', 7") a une élasticité au rebondissement supérieure à 45%.

11. Bandage pneumatique pour véhicules selon l'une quelconque des revendications 1 à 10, caractérisé en ce que le mélange de caoutchouc destiné à la couche de caoutchouc (7, 7', 7") est un mélange adhésif.

*Fig. 1*

EP 0 280 674 B1

## Fig. 2

3' 4' 5'          7'          4a'

## Fig. 3

3" 4" 5"          7"          3a" 4a"

EP 0 280 674 B1